# EUROPEAN PATENT SPECIFICATION

(11) **EP 3 224 491 B1**
(45) Date of publication and mention of the grant of the patent: **05.01.2022**
(21) Application number: 15862539.2
(22) Date of filing: 27.11.2015
(51) Int. Cl.: F16B 39/10, B60B 3/16

(54) **WHEEL RETENTION SYSTEM**
RADRÜCKHALTESYSTEM
SYSTÈME DE RETENUE DE ROUE

(30) Priority: 27.11.2014 AU 2014904801
(43) Date of publication of application: 04.10.2017
(73) Proprietor: Ferman, Michael, Peakhurst, New South Wales 2210 (AU)
(72) Inventor: KRATZER, Oliver, Clemens, Robert, Ballina, NSW 2478 (AU)
(74) Representative: Soldatini, Andrea
(86) International application number: PCT/AU2015/000721
(87) International publication number: WO 2016/081985

(56) References cited:
- EP-A1- 1 538 351
- WO-A1-2004/042243
- CA-A1- 2 734 659
- GB-A- 2 394 265
- GB-B- 2 352 012
- US-A- 4 737 057
- US-A1- 2002 031 416
- US-A1- 2011 250 036

## Description

This invention relates to wheel nuts for retaining vehicle wheels on the wheel hub and for ameliorating the risk of the nuts becoming loose.

### Background to the invention.

In order to prevent wheel nuts loosening one approach has been to provide a stud for the nut that has an internal thread of opposite hand to the thread of the nut. Such an arrangement is disclosed in USA patent 6916144.

Another proposal is to use a compression collar for the nut as in USA patent 6935825.

A more recent approach is disclosed in AU 2009905537 which uses a custom wheel stud having an external thread to co-operate with the internal thread of said wheel nut has an end portion adapted to project beyond the wheel nut and a retaining cap with internal grooves or ribs complementary to external ribs or grooves on said wheel stud adapted to fit over said wheel stud with and means to secure the retaining cap to said wheel nut.

In these arrangements it is important to have tamper proof nut assembly that visibly indicates that the nut is tightened. In addition it is usual to provide an aesthetic cap or cover for the nut.

EP 1 538 351 A1, over which claim 1 is characterised, discloses a wheel nut locking assembly comprising two anchor members, each having two apertures, which are fitted over threaded studs on a wheel hub. Wheel nuts are then applied to the studs and an annular component having locking caps is fitted over the wheel nuts. The annular component is held in place using locking pins.

It is an object of this invention to provide a tamper evident wheel retention arrangement that does not require a custom stud.

### Brief description of the invention

According to an aspect of the present invention there is provided a wheel nut and connector combination as claimed in claim 1.

This arrangement does not require a custom stud. In some preferred mechanisms custom nuts may be needed but in other preferred embodiments conventional nuts may be used.

The connector is easily seen and is an indication that the wheel nuts are unable to be loosened.

It is not essential for the system to prevent any loosening of the nuts. The system prevents the nuts becoming detached from the studs.

A locking mechanism with a key may be used to lock the connector in place. The connector may include a visual indicator that the connector is locked in place. This not only prevents the wheels becoming detached from the wheel hub but also prevents the theft of wheels which is a problem in some countries.

### Detailed description of the invention

Various arrangements not forming part of the invention and an embodiment of the invention will be described with reference to the drawings in which a connector is shown;
Figure 1 illustrates a side view of a wheel rim;
Figure 2 A B and C illustrates an exploded view of a connector, a lock and unlock position respectively of a first arrangement;
Figure 3 A B and C illustrates an exploded view of a connector, a lock and unlock position respectively of a second arrangement;
Figure 4 A B and C illustrates an exploded view of a connector, a lock and unlock position respectively of a third arrangement;
Figure 5 A B and C illustrates an exploded view of a connector, a lock and unlock position respectively of a fourth arrangement;
Figure 6 A B and C illustrates an exploded view of a connector, a lock and unlock position respectively of a fifth arrangement;
Figure 7 A B C and D illustrates an exploded view of a connector, a lock, unlock and assemble position respectively of a sixth arrangement;
Figure 8 A B is an exploded view and assembly view of a connector of a seventh arrangement;
Figure 9 A B illustrates the lock and unlock positions of the connector of figure 8;
Figure 10 A B and C illustrates an exploded view of a connector, a lock and unlock position respectively of an eighth arrangement;
Figure 11 A B and C illustrates an exploded view of a connector, a lock and unlock position respectively of a ninth arrangement;
Figure 12 A B C is an exploded view and section view of a connector of a tenth arrangement;
Figure 13 A B illustrates an assemble, lock and unlock views of the connector of figure 12;
Figure 14 A B is an exploded view and assembly view of a connector of an eleventh arrangement;
Figure 15 A B illustrates the lock and unlock positions of the connector of figure 14;
Figure 16 A B C illustrates an assemble, lock and unlock views of a connector of a twelfth arrangement;
Figure 17 is an exploded view of an embodiment of the invention;
Figure 18 is a cross sectional view of the assembled system of the embodiment of figure 17.

In all arrangements and embodiments the wheel hub is secured to the alloy wheel rim 2 by the stud 3 and its associated wheel nut 6. The stud 3 has helical threads that cooperate with corresponding threads on the internal surface of nut 6. The connector 10 links one wheel nut 6 to another preventing both nuts from loosening over time and potentially falling off when the truck is in transit.

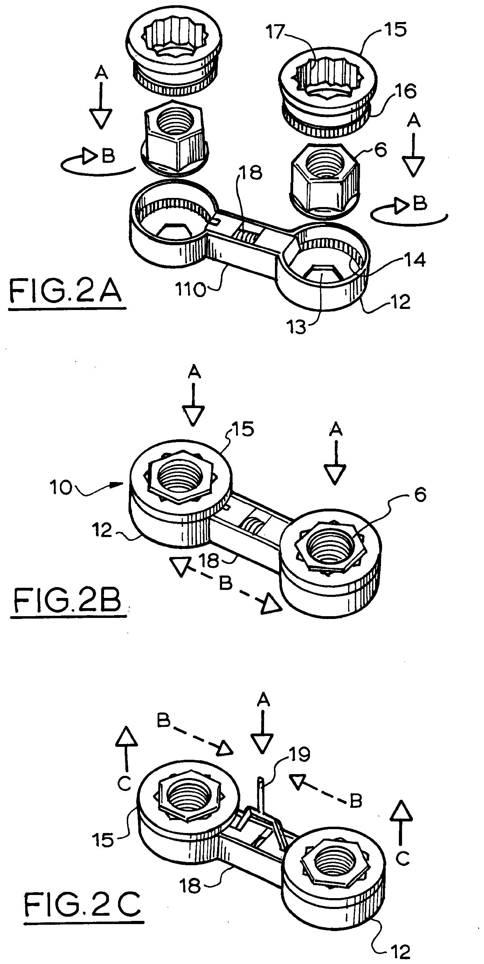

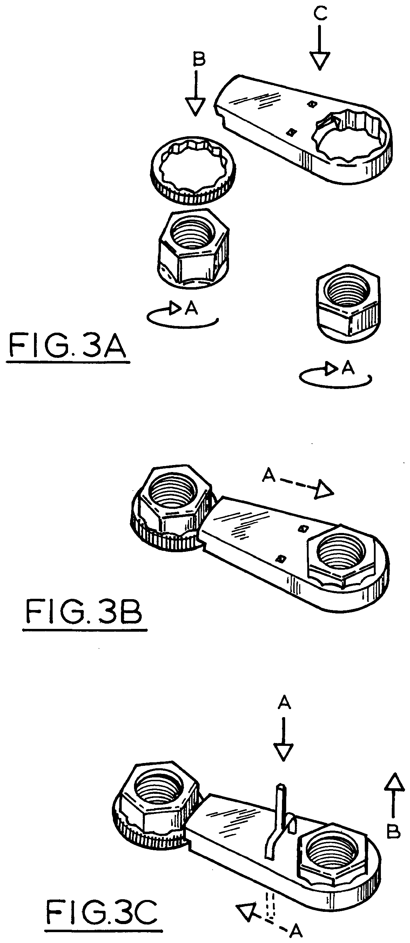

In the first arrangement shown in figure 2 the connector 10 consists of a base plate 11 with a pair of cups 12 having holes 13 to fit over the wheel studs 3. The nuts 6 are fastened to the studs 3 and the locking caps 15 are placed over the nuts. The lower rim 16 of the cap 15 incorporates gear teeth to engage corresponding grooves 14 in the base of each cup 12. The upper rim 17 of each cap 15 is serrated to engage the corners of the hexagonal nut 6 so that the caps prevent rotation of the nuts 6. The central portion of the connector 10 between cups 12 is a spring loaded locking mechanism 18, to prevent removal of the caps 15. As shown in fig 2 C a key 19 is used to unlock the mechanism 18 and allow removal of the caps 15. In the second arrangement of figure 3 the connector 10 is essentially in two parts. One part consists of a gear ring 21 which seats over one nut 6 and the other is a locking part 22 with teeth 23 at one end and a ring 24 with serrated edges 25 to engage the corners of the adjacent hexagonal nut 6 to prevent rotation of the nut 6. The nuts 6 are locked by placing the locking part 22 over the fastened nuts and allowing the spring loaded mechanism 28 to lock onto the nut 6. The nuts may be customised to interact with the lock 28. As shown in fig 3 C a key 19 is used to unlock the mechanism 28 and allow removal of the caps locking part 22.

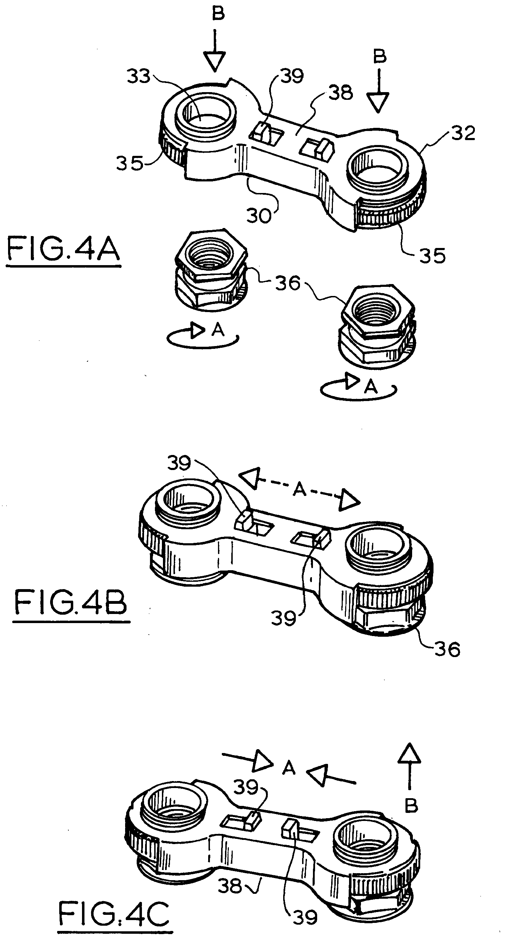

In the third arrangement of figure 4 the connector 30 consists of a central portion with a pair of annular covers 32 having holes 33 to fit over the wheel studs 3. The custom nuts 36 are fastened to the studs 3 and the covers 32 of connector 30 are placed over the nuts 36. The outer rim 35 of the covers 32 incorporates gear teeth to be engaged by the spring loaded locking mechanism 38. The internal surface of each cover 32 is serrated to engage the corners of the hexagonal nut 36 to prevent rotation of the nuts 36. The central portion of the connector 30 between covers 32 is a spring loaded locking mechanism 38. As shown in fig 4 C compression of the spring loaded tabs 39 unlocks the mechanism 38 and allow removal of the connector 30.

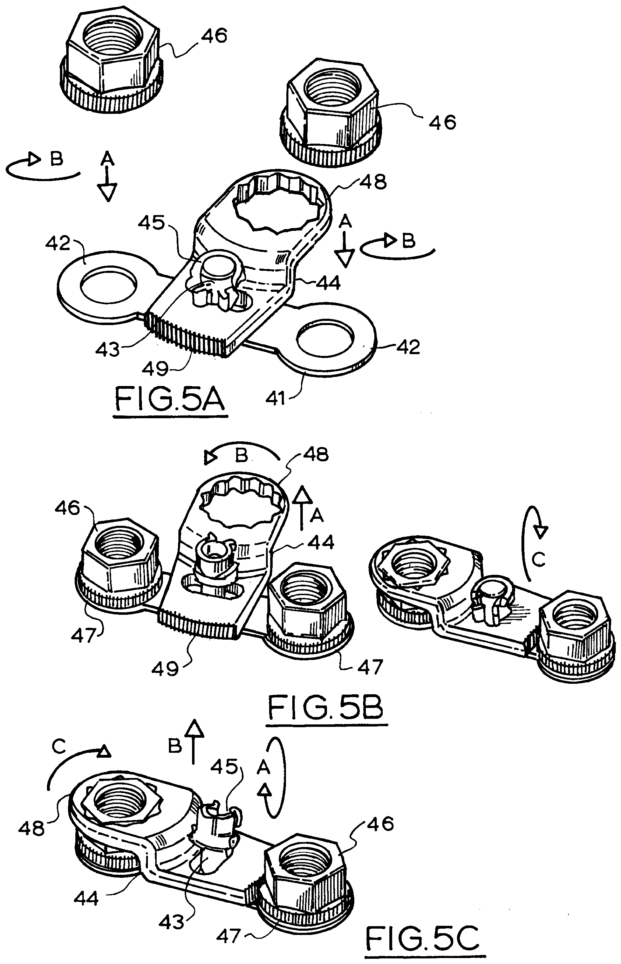

Another mechanism is illustrated in a fourth arrangement shown in figure 5. The connector 40 consists of a base plate 41 with a pair of annular rings 42 to fit over the wheel studs 3. The custom nuts 46 have gear teeth 47 on their lower edges. Locking part 44 is clipped onto the boss 43 in the centre of base plate 41. Boss 43 incorporate a retaining clip 45 which can be turned to lock the part 44 to base plate 41. The locking part 44 includes a ring 48 with an internal serrated edge to engage the corners of the hexagonal nut 46 to prevent rotation of the nuts 46. The other end 49 of part 44 has teeth to engage the gear teeth 47 of the adjacent nut 46. When the locking part 44 engages both nuts 46 the retaining clip 45 is turned to lock the part 44 to base plate 41.

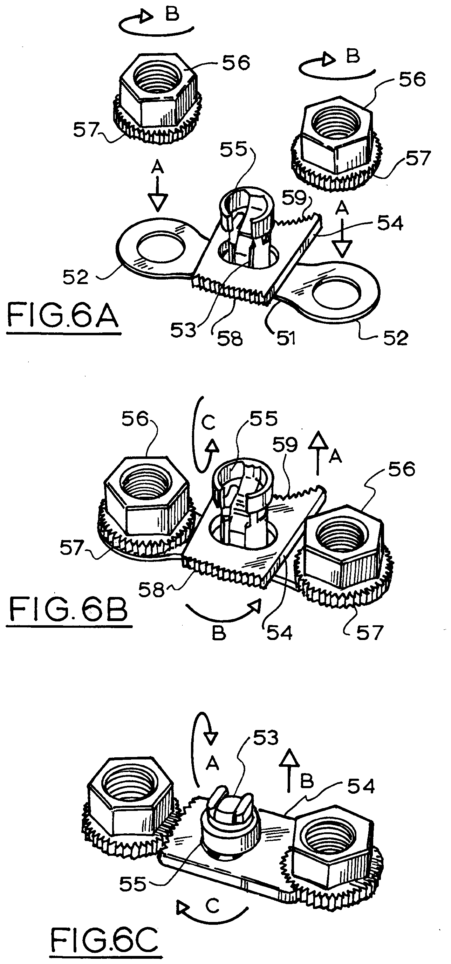

Another mechanism is illustrated in a fifth arrangement shown in figure 6. The connector 50 consists of a base plate 51 with a pair of annular rings 52 to fit over the wheel studs 3. The custom nuts 56 have gear teeth 57 on their lower external edges. Locking part 54 is clipped onto the boss 53 in the centre of base plate 51. Boss 53 incorporates a retaining clip 55 which can be turned to lock the part 54 to base plate 51. The locking part 54 includes convex edge 58 with gear teeth and a concave edge 59 to engage the gear teeth 5 7 of the custom nuts 56. When the locking part 54 engages both nuts 56 the retaining clip 55 is turned to lock the part 54 to base plate 51. To unlock the clip 55 is raised the locking part 54 is lifted clear and the nuts 56 can be removed.

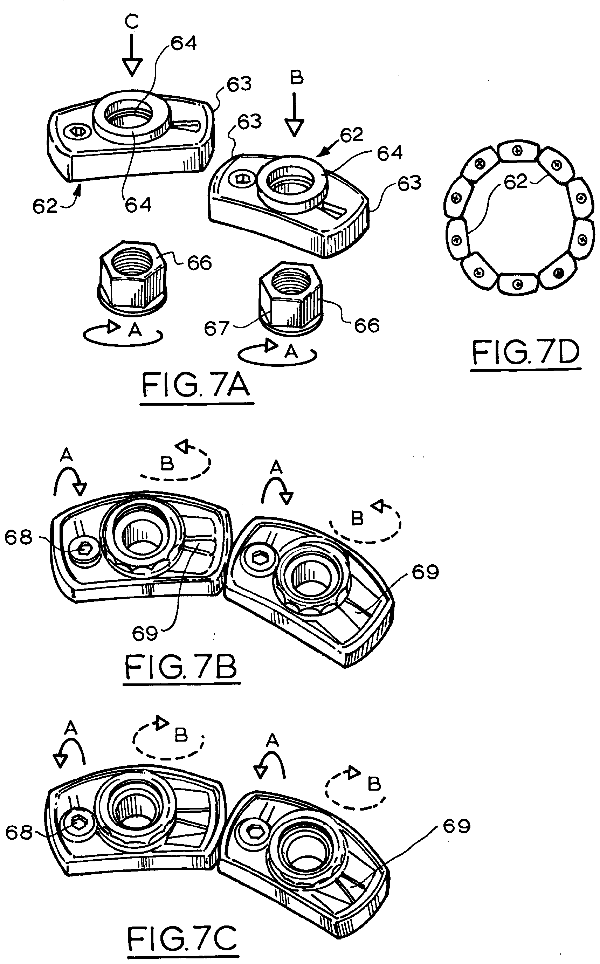

Figure seven illustrates a sixth arrangement in which the connector is in a minimum of two parts and each part is identical and associated with one custom nut. In this arrangement the connectors may link all the nuts as shown in figure 7D. Each connector part 62 has concave edges 63 bearing gear teeth that engage wit the corresponding edges 63 of adjacent connectors. The central aperture 64 of part 62 is internally shaped to locate on the corners of the custom nut 66 which includes a recess 67 on each corner. An allen key turnable nut 68, engages the recesses 67 in the custom nut 66 to prevent removal of the part 62. The locking of the part 62 exposes a lock status indicator 69 which is green when locked and red when the part 62 is able to be removed.

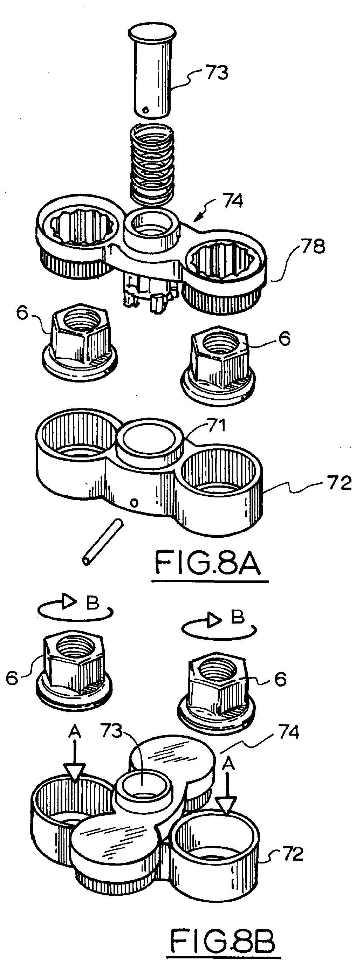

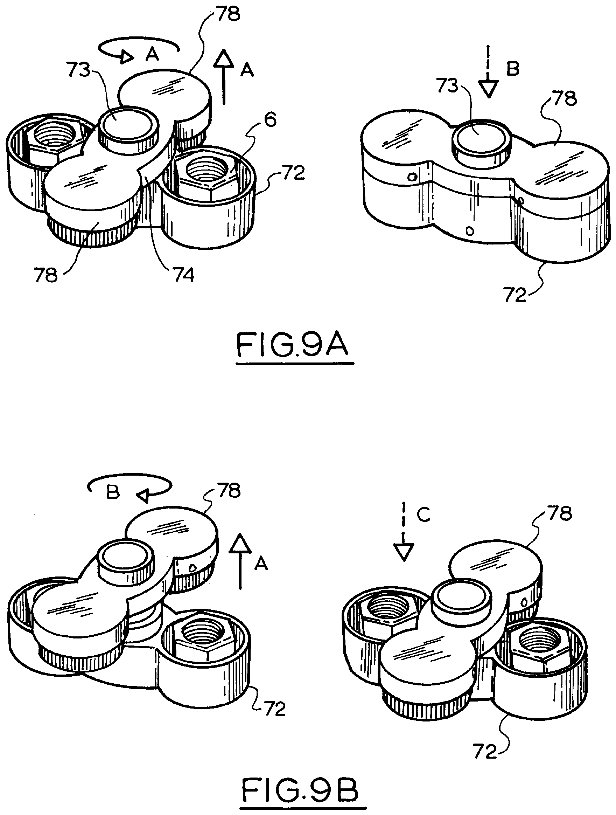

Figures 8 and 9 illustrate a seventh arrangement in which the connector 70 has a location part 71 with a pair of annular cylinders 72, to fit over the wheel studs 3. The annular cylinders 72 have vertical arrayed splines on its internal surface. Conventional nuts 6 may be used. Locking part 74 is secured by the spring tensioned pivot axis 73 in the centre of location part 71. The locking part 74 includes a pair of caps 78 with an internal grooved surface to engage the splines of cylinders 72 and cover the nuts 6. The locating part 71 is placed over two adjacent nuts and the locking part 74 is rotated so that the caps 78 are over the nuts 6. The spring mechanism closes the part 74 onto part 71. To unlock the part 74 is raised and rotated 90degrees as shown in figure 9 B.

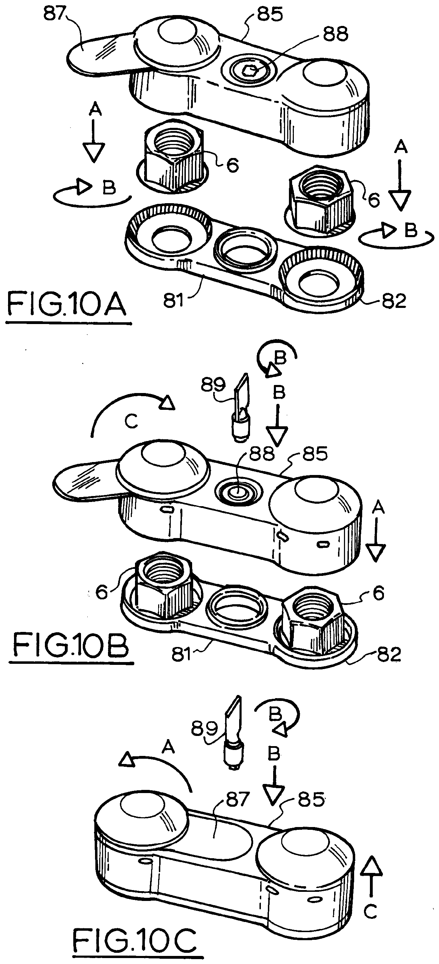

In the eighth arrangement shown in figure 10 the connector 80 consists of a base plate 81 with a pair of cups 82 having holes 83 to fit over the wheel studs 3. The nuts 6 are fastened to the studs 3 and the locking part 85 is placed over the nuts. The central portion of the locking part 85 includes a spring loaded locking mechanism 88 to prevent removal of the locking part 85. As shown in fig 10 C a key 89 is used to unlock the mechanism 88 and allow removal of the locking part 85. The tongue 87is rotated to cover the lock and prevent ingress of dirt. To remove the locking part 85 the tongue is rotated to expose the lock 88 which is unlocked with the key 89 so that locking part 85 can be removed to allow the nuts 6 to be removed.

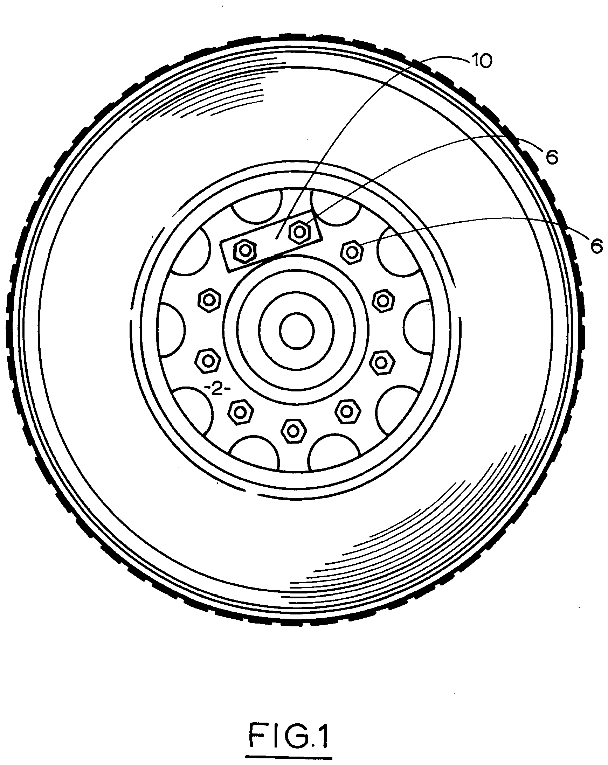

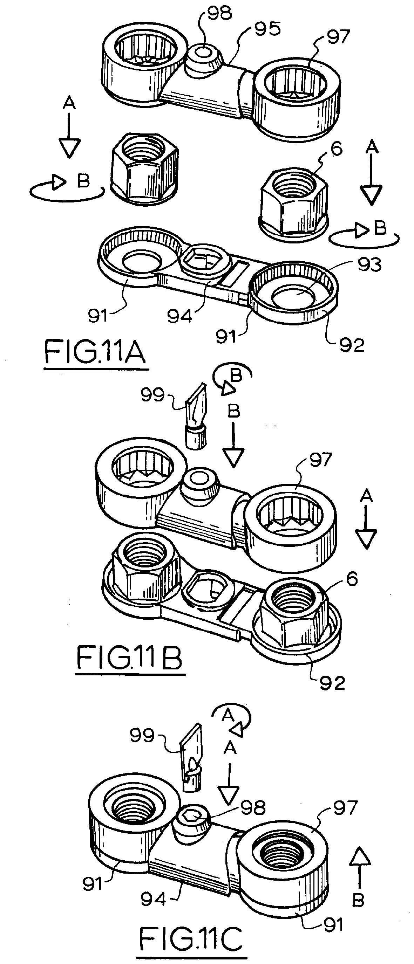

In the ninth arrangement shown in figure 11, the connector 90 consists of a base plate 91 in two parts each having cups 92 with holes 93 to fit over the wheel studs 3. The two parts of plate 91 are connectable at location part 94 to accommodate for varying distances between the studs on the wheel rim. The nuts 6 are fastened to the studs 3 and the locking part 95 is placed over the nuts. The central portion of the locking part 95, includes a spring loaded locking mechanism 98 to prevent removal of the locking part 95 from the base plate 91. The locking part 95 includes a ring 97 with an internal serrated edge to engage the corners of the hexagonal nut 6 to prevent rotation of the nuts 6. As shown in fig 1 1 C a key 99 is used to unlock the mechanism 98 and allow removal of the locking part 95. The feature of this arrangement is the adjustability of the length of parts 91 and 95.

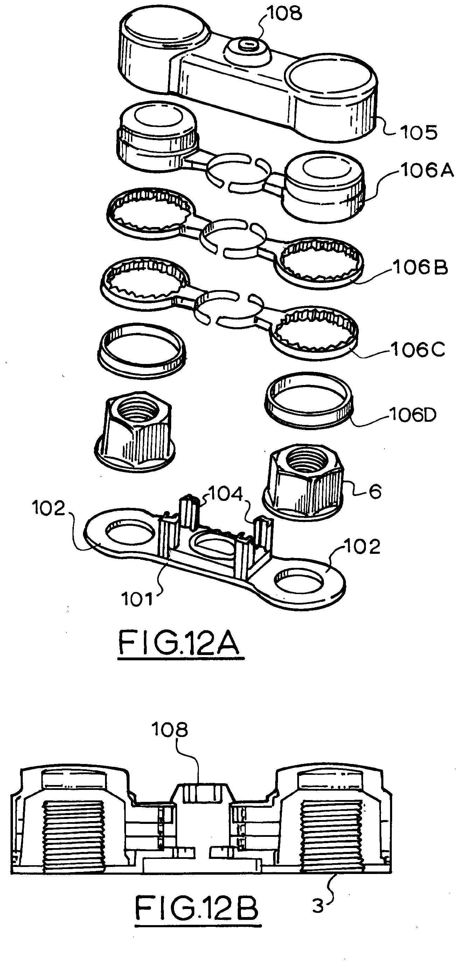

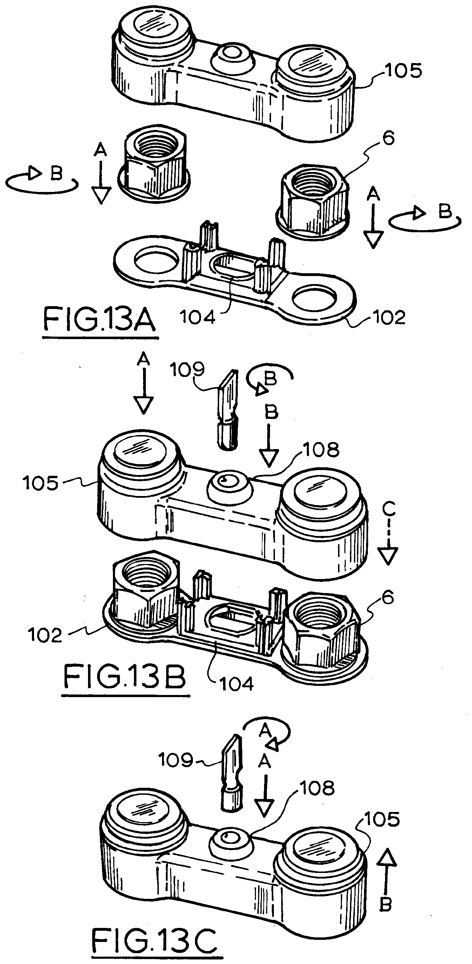

In the tenth the arrangement shown in figures 12 and 13 the connector 100 consists of a base plate 101 having 2 annular rings 102 to fit over the wheel studs 3. The central portion 104 of plate 101 is adapted to receive the locking mechanism. The nuts 6 are fastened to the studs 3 and the locking part 105 and the associated rings 106 A B and C and D are placed over the nuts. The rings 106 A B and C include leaf springs 107 to cooperate with the lock actuator 108 to form a spring loaded locking mechanism. The rings 106 A B and C are provided with an internal serrated edge to engage the corners of the hexagonal nut 6 to prevent rotation of the nuts 6. The three rings 106 self align about the nut 6 and variations are compensated for by the leaf springs 107. As shown in fig 13 B and C a key 109 is used to unlock the mechanism 108 and allow removal of the locking part 105.

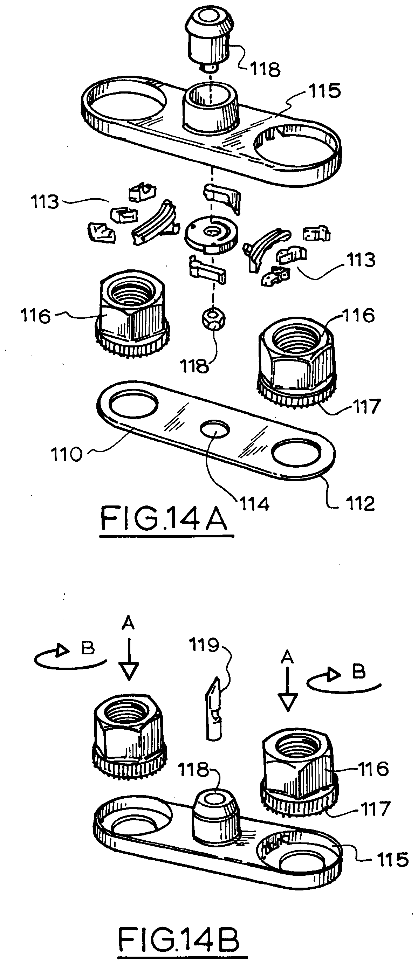

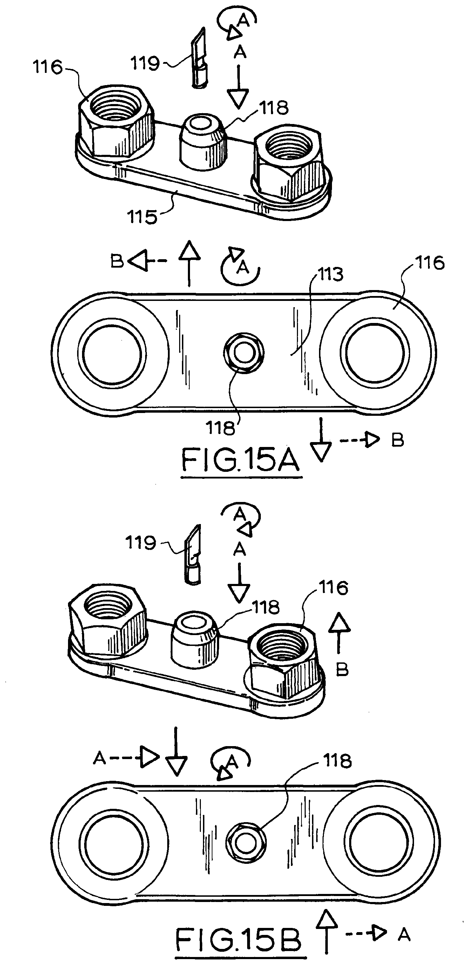

In the eleventh arrangement shown in figures 14 and 15 the connector 110 consists of a base plate 111 having 2 annular rings 1 12 to fit over the wheel studs 3. The central portion 114 of plate 1 11 is adapted to receive the locking actuator 118. The custom nuts 116 incorporate ratchet teeth 1 17 on their lower edges. The locking part 115 includes a locking actuator 118 and associated pawls 113 that engage the ratchet teeth 117, to form a locking mechanism. The custom nuts 116 are fastened to the studs 3 after the locking part 115 has been placed on the base plate 111. As shown in fig 15 A and B a key 119 is used to turn the actuator 118, disengage the pawls from the ratchet teeth and allow removal of the locking part 115.

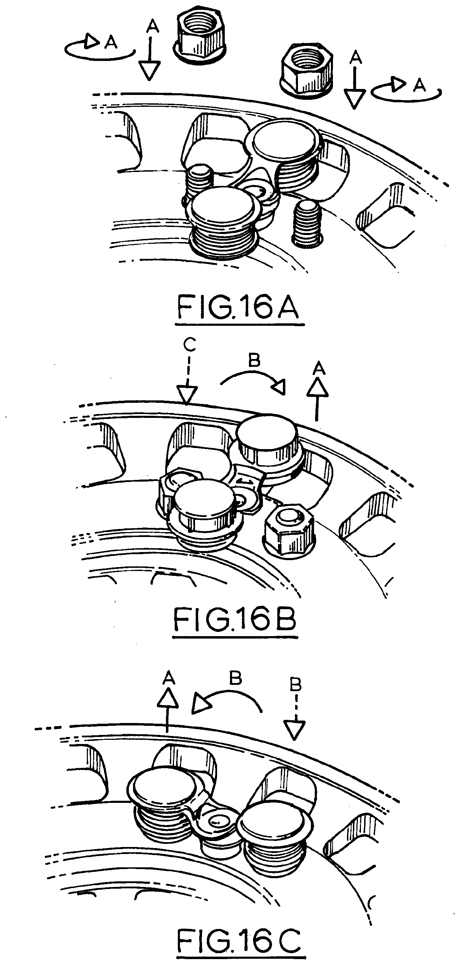

Figure 16 illustrates a twelfth arrangement in which the connector 120 is attached via its central portion 121 to a stud 124 on the custom wheel rim 2. The connector 120 has a pair of annular cylindrical caps 122 to fit over the wheel nuts 6. The annular cylinders 122 have vertical arrayed splines on its internal surface. Conventional nuts 6 may be used. The nuts 6 are fastened to the studs 3 while the connector is aligned at right angles to the axis between the studs 3. The connector is lifted and turned so that the caps 122 are over the nuts 6. The spring loaded mechanism in the central portion 121 closes the connector 120 onto the wheel nuts. To access the wheel nuts 6 the connector 120 is raised and rotated 90 degrees.

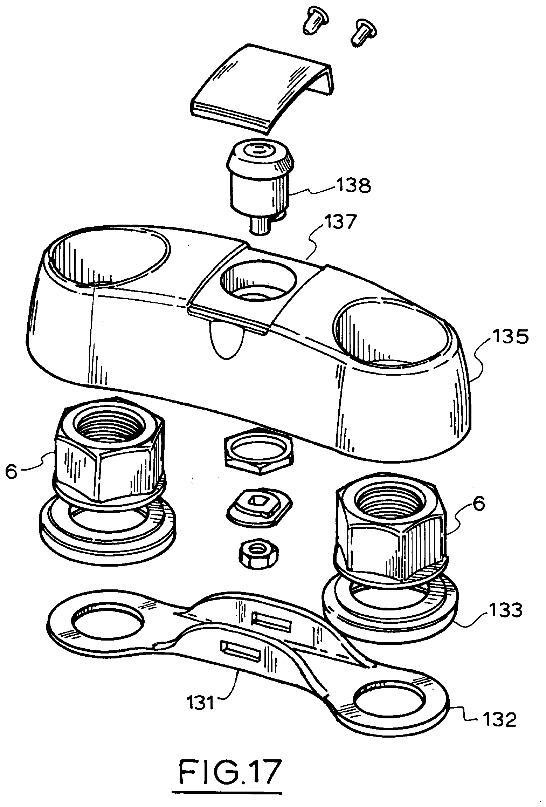

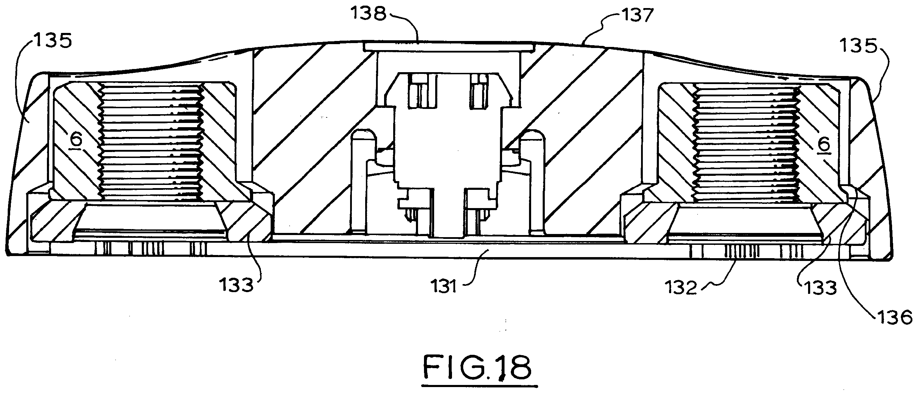

In the embodiment of the invention shown in figures 17 and 18 the connector consists of a base plate 131 with a pair of holes 132 to fit over the wheel studs 3. The nuts 6 and spacer 133 are fastened to the studs 3 and the locking part 135, 137 is placed over the nuts so that each cylindrical end portion 135 seats over each nut 6. The internal lower rim 136 of the end portions 135 prevents movement of the hexagonal nut 6 along the shaft of the stud 3. The central portion 137 of the connector incorporates a locking mechanism 138 to prevent removal of the connector.

Those skilled in the art will realise that this invention provides a unique and less expensive means of ensuring that a wheel nut is securely fastened to the wheel hub. Those skilled in the art will also realise that this invention may be implemented in embodiments other than those described without departing from the scope of the invention as claimed.

## Claims

1. A wheel nut and connector combination for use in a wheel rim (2) with a plurality of studs (3) having external threads to receive fastening nuts, the combination comprising:
a plurality of hexagonal wheel nuts (6) each with an internal thread adapted to be
secured to said studs (3); and
a connector adapted to be attached to and connect adjacent wheel nuts (6);
said connector including a mechanism to prevent rotation of the wheel nuts (6), the connector having a base plate (131) and a locking part (135, 137), the base
plate (131) having a pair of holes (132) which fit over two of the studs (3),
**characterised in that** two of the wheel nuts (6) and respective spacers (133)
are fastened to the studs (3), the locking part (135, 137) having two cylindrical end
portions (135) which each have internal lower rims (136), the locking part (135, 137),
being placed over the two wheel nuts (6) such that the internal lower rims (136) of the cylindrical end portions (135) seat over each wheel nut (6) and prevent movement of the wheel nuts (6) along the shafts of the studs (3),
and a central portion (137) of the connector having a locking mechanism (138) to prevent removal of the connector.

2. The combination of claim 1, wherein the locking mechanism (138) engages the base plate (131) and the locking part (137) to prevent removal of the connector.

3. The combination of claim 1 or 2, wherein the locking part (137) has a central
cylindrical aperture which receives the locking mechanism (138) therethrough.

4. The combination of claim 1, 2 or 3, wherein the connector further comprises a cap which engages a depression on a top surface of the locking part (137) and removably covers the locking mechanism (138).

5. The combination of any one of claims 1 to 4, wherein the locking mechanism (138) with a key locks the connector in place.

## Patentansprüche

1. Kombination aus Radmutter und Verbinder zur Verwendung bei einer Radfelge (2) mit einer Mehrzahl von Stehbolzen (3), die Außengewinde haben, um Befestigungsmuttern aufzunehmen, wobei die Kombination enthält:
eine Mehrzahl von hexagonalen Radmuttern (6), von denen jede mit einem Innengewinde versehen ist, das ausgelegt ist, um an den Stehbolzen (3) befestigt zu werden; und
einen Verbinder, der zum Anbringen und Verbinden benachbarter Muttern ausgelegt ist;
wobei der Verbinder einen Mechanismus enthält, um eine Drehung der Radmuttern (6) zu verhindern, wobei der Verbinder eine Basisplatte (131) und ein Verriegelungsteil (135, 137) hat, wobei die Basisplatte (131) ein Paar von Löchern (132) hat, die über zwei der Stehbolzen (3) passen,
**dadurch gekennzeichnet, dass** zwei der Radmuttern (6) und entsprechende Abstandhalter (133) an den Stehbolzen (3) befestigt werden, das Verriegelungsteil (135, 137) zwei zylindrische Endteile (135) hat, die jeweils interne untere Ränder (136) haben, das Verriegelungsteil (135, 137) über den zwei Radmuttern (6) angeordnet wird, so dass die internen unteren Ränder (136) der zylindrischen Endteile (135) über jeder Radmutter (6) sitzen und eine Bewegung der Radmuttern (6) längst der Stangen der Stehbolzen (3) verhindern, und ein Zentralteil (137) des Verbinder einen Verriegelungsmechanismus (138) hat, um ein Entfernen des Verbinders zu verhindern.

2. Kombination nach Anspruch 1, wobei der Verriegelungsmechanismus (138) in die Basisplatte (131) und das Verriegelungsteil (137) (137) eingreift, um das Entfernen des Verbinders zu verhindern.

3. Kombination nach Anspruch 1 oder 2, wobei das Verriegelungsteil (137) eine zentrale zylindrische Öffnung hat, die dadurch hindurch den Verriegelungsmechanismus (138) aufnimmt.

4. Kombination nach Anspruch 1, 2 oder 3, wobei der Verbinder ferner eine Kappe enthält, die in eine Vertiefung an einer Oberseitenoberfläche des Verriegelungsteils (137) eingreift und den Verriegelungsmechanismus (138) entfernbar bedeckt.

5. Kombination nach einem der Ansprüche 1 bis 4, wobei der Verriegelungsmechanismus (138) den Verbinder mit einem Schlüssel am Ort verriegelt.

## Revendications

1. Une combinaison d'un écrou de roue et d'un connecteur pour utilisation dans une jante de roue (2) avec une pluralité de goujons (3) ayant des filets extérieurs pour recevoir des écrous de fixation, la combinaison comprenant une pluralité d'écrous de roue hexagonaux (6), chacun ayant un filetage intérieur adapté pour être fixés auxdits goujons (3) ; et un connecteur adapté pour être fixé et connecté à des écrous de roue adjacents (6) ; ledit connecteur comprenant un mécanisme pour empêcher la rotation des écrous de roue (6), le connecteur ayant une plaque de base (131) et une partie de verrouillage (135, 137), la plaque de base (131) ayant une paire d'orifices (132) qui s'adaptent sur deux des goujons (3), **caractérisée en ce que** deux des écrous de roue (6) et des pièces d'écartement respectives (133) sont fixés aux goujons (3), la partie de verrouillage (135, 137) ayant deux parties d'extrémité cylindriques (135) qui ont chacune des rebords inférieurs intérieurs (136), la partie de verrouillage (135, 137) étant placée sur les deux écrous de roue (6) de façon que les rebords inférieurs intérieurs (136) des parties d'extrémité cylindriques (135) reposent sur chaque écrou de roue (6) et empêchent le mouvement des écrous de roue (6) le long des arbres des goujons (3), et une partie centrale (137) du connecteur ayant un mécanisme de verrouillage (138) pour empêcher le retrait du connecteur.

2. La combinaison selon la revendication 1, dans laquelle le mécanisme de verrouillage (138) coopère avec la plaque de base (131) et la partie de verrouillage (137) pour empêcher le retrait du connecteur.

3. La combinaison selon l'une des revendications 1 et 2, dans laquelle la partie de verrouillage (137) a une ouverture cylindrique centrale qui reçoit le mécanisme de verrouillage (138) à travers elle.

4. La combinaison selon l'une des revendications 1 à 3, dans laquelle le connecteur comprend en outre un capot qui coopère avec un logement en creux sur la surface supérieure de la partie de verrouillage (137) et recouvre de manière amovible le mécanisme de verrouillage (138).

5. La combinaison selon l'une quelconque des revendications 1 à 4, dans laquelle le mécanisme de verrouillage à clé (138) bloque le connecteur en place.
